# EUROPÄISCHE PATENTSCHRIFT

(11) **EP 1 432 561 B1**
(45) Veröffentlichungstag und Bekanntmachung des Hinweises auf die Patenterteilung: **08.10.2008**
(21) Anmeldenummer: 02774605.6
(22) Anmeldetag: 12.09.2002
(51) Int. Cl.: B29B 9/06, B01J 2/20

(54) **MESSERGRANULATOR UND VERFAHREN ZUR HESTELLUNG VON SCHNITTKÖRPERN**
BLADE GRANULATOR AND METHOD FOR THE PRODUCTION OF CUT BODIES
GRANULATEUR A LAMES ET PROCEDE DE PRODUCTION DE CORPS DE COUPE

(30) Priorität: 25.09.2001 DE 10147159
(43) Veröffentlichungstag der Anmeldung: 30.06.2004
(73) Patentinhaber: LANXESS Deutschland GmbH, 51369 Leverkusen (DE)
(72) Erfinder: LIPPERT, Siegfried, 50829 Köln (DE); BIELFELDT, Tim, 50999 Köln (DE); MILLING, Klaus, 50769 Köln (DE); WEICKERT, Bodo, 42799 Leichlingen (DE); WEHNERT, Wolfgang, 47800 Krefeld (DE)
(86) Internationale Anmeldenummer: PCT/EP2002/010213
(87) Internationale Veröffentlichungsnummer: WO 2003/028969

(56) Entgegenhaltungen:
- DE-A- 2 813 332
- DE-B- 1 263 275
- GB-A- 245 286
- US-A- 3 341 892

## Beschreibung

Die Erfindung betrifft einen Messergranulator für die Herstellung von Schnittkörpern aus viskosen Stoffen und ein Verfahren zur Herstellung von Schnittkörpern.

Bei der Herstellung von Granulaten oder Schnittkörpern aus Stoffen, die sich im viskosen Zustand befinden, geht man auf mehreren Wegen vor.

Eine Methode besteht darin, das Material zu einem Walzenstuhl zu führen. Die Walzen sind geeignet temperiert. Auf den Walzen befindet sich eine Wulst, die kräftig gewalkt wird. Das frisch zugeführte Material wird auf die Wulst gegeben und in die Wulst eingearbeitet. Dabei kühlt sich das Material soweit ab, dass eine zähe Masse mit geeigneter Viskosität entsteht.

Von den Walzen wird ein Band z.B. aus thermoplastischen Polymer abgezogen, das gekühlt wird. Danach wird dieses Band mit einem Granulator gehäckselt, sodass "Würfelgranulat" entsteht. Aus dem Band können auch andere Formen geschnitten oder gestanzt werden. Ein solches Vorgehen ist z.B. üblich bei der Verarbeitung von Teigen in Bäckereien zur Herstellung von Backwaren.

Eine weitere Methode besteht darin, über eine Düse direkt ein Band auszupressen, das man abkühlt und wie oben in Formen schneidet oder stanzt. Das setzt voraus, dass die Flüssigkeit im zähen hochviskosen Zustand aus einer Düse gepresst werden kann.

Eine weitere Methode besteht darin, über eine Düse mit vielen Öffnungen auszupressen. Es werden Fäden ausgepresst, die man zusätzlich durch Strecken im Durchmesser variieren kann. Nach geeigneter Abkühlung kann man entweder Fäden spinnen oder man kann häckseln und erhält Granulatkörner bestimmter Form, meist in Zylinderform.

Eine weitere Methode besteht darin, über eine Düse mit vielen Öffnungen auszupressen. Die austretenden "Fäden" werden mittels einer Schneidevorrichtung, meist Messer, direkt an der Düse geschnitten. Je nach Austrittsgeschwindigkeit und der Schnittfrequenz erhält man zylinderartige Körner bestimmter Länge.

Die Erfindung geht von dem letztgenannten Verfahren aus, das sich in letzter Zeit immer mehr verbreitet hat.

Kritisch ist die Viskosität des aus der Düse austretenden Materials, damit überhaupt eine Schneidung möglich ist. Bei dünnflüssigem Material kann man nicht schneiden. Mit steigender Viskosität beginnen die Schnittkörper klebrig und schmierig zu werden. Das führt zum Verschmieren, Zusammenbacken oder Aneinanderketten von Schnittkörpern.

Erst bei ausreichend hoher Viskosität entstehen ausreichend feste Schnittkörper, die allein existieren können.

Die so erhaltenen Schnittkörper sind bei runden Düsenöffnungen von der erwarteten Zylinderform üblicherweise oft weit entfernt.

Es entstehen z.B. je nach Stoff kugelförmige, linsenförmige oder muschelförmige Granulate (beispielsweise bei thermoplastischen Polymeren).

Die Ursachen dafür können sein: Die Oberflächenspannung des Materials, die unterschiedliche Abkühlgeschwindigkeit des inneren und des äußeren Materials, wobei Spannungen im Korn eingefroren werden, sowie elastische Entspannung nach dem Austritt aus der Düse.

Ein weiterer Grund für die Verformung der Schnittkörper sind mechanische Belastungen beim Schneiden, beim Abheben vom Schneidmesser oder beim Aufprall an Wände oder Einbauten. Durch mechanische Verformung entstehen oft längliche eingedrückte Schnittkörper.

In den meisten Fällen sind Verformungen der Schnittkörper nicht erwünscht.

Viele Materialien, besonders Kunststoffe im viskosen Zustand, haben eine schlechte Wärmeleitfähigkeit und eine größere Temperaturabhängigkeit des Volumens.

Bei vielen Stoffen kühlt sich die Oberfläche schnell ab und verhärtet. Infolge der schlechten Wärmeleitfähigkeit bleibt das Innere eines Korns längere Zeit auf hoher Temperatur, geringer Viskosität und großem Volumen.

Mit der langsam erfolgenden Abkühlung des inneren Teils eines Granulatkornes erfährt dieses Material eine Verringerung des Volumens.

Da die äußere Hülle bereits formstabil ist, bildet sich im Innern ein Hohlraum , in dem Vakuum vorliegt, die sog. Vakuole. Bei sehr langsamer Abkühlung bildet sich diese Vakuole nicht. Sobald dieser Hohlraum geöffnet wird, z.B. durch mechanische Einwirkung oder durch zu dünne Wände, kann umgebende Luft oder umgebende Flüssigkeit in diesen Hohlraum eindringen. Bei der Weiterverarbeitung kann es zu Qualitätsverlusten durch die in den geöffneten Hohlräumen befindlichen Stoffe kommen. So bewirkt z.B. eingeschlossenes Wasser ein Verschäumen bei der Weiterverarbeitung.

Die Abkühlgeschwindigkeit des Schnittkörpers nach der Schneidung ist folglich von großem Einfluss auf seine Form und auf seinen Gehalt an Vakuolen.

Die häufigsten Methoden der Abkühlung sind:
- Einleiten des Schnittkörpers in Wasser
- Besprühen mit Wasser,
- Behandeln mit Dampf, Luft oder sonstigen Kühlmitteln.

Es kommt auch darauf an, sofort nach dem Schneiden durch geeignete Kühlung die Form des Schnittkörpers zu stabilisieren und das Anhaften an den Schneidwerkzeugen zu verhindern. Die Kühlung muss also bereits beim Schneiden einsetzen. Dies lässt sich z.B. durch Besprühen der Messer erreichen. Die Messer verwirbeln ihrerseits das Kühlmittel und gewährleisten einen Kontakt mit Kühlmittelnebel auch während des Abfluges des Schnittkörpers vom Messer.

Ein bekanntes Verfahren zur Kühlung der rotierenden Messers ist die axiale Besprühung mit Kühlmittel (siehe z.B. die US-A-3 341 892).

Nachteilig ist, dass die Düsenöffnungen dabei ebenfalls mit besprüht und gekühlt werden.

Die Düsenöffnungen kühlen sich ab und verschließen viele Öffnungen ganz oder teilweise. Die Folge ist, dass die offen gebliebenen Düsenlöcher mehr Durchsatz haben, also größere Schnittkörper bilden und die teilweise geöffneten sehr kleine Schnittkörper bilden (Flitter, Plättchen). Es ergibt sich ein breites Korngrößenspektrum.

Das Problem der unerwünschten Besprühung der Düsenlöcher soll durch die Erfindung auch gelöst werden.

Aufgabe der Erfindung ist es, einen Messergranulator und ein Verfahren zur Herstellung von Schnittkörpern bereitzustellen, der die Nachteile der bekannten Vorrichtungen vermeidet und eine vergleichbar bessere und gleichmäßigere Produktqualität insbesondere von Polymergranulaten liefert.

Die Aufgabe wird erfindungsgemäß dadurch gelöst, dass am Messergranulator die Zwischenräume zwischen den Messern wenigstens teilweise mit einem Spritzschutz abgedeckt sind, der an der Messerwelle befestigt ist.

Gegenstand der Erfindung ist ein Messergranulator für die Herstellung von Schnittkörpern aus viskosen Stoffen, insbesondere aus Polymeren mit einer Flüssigkeitssprüheinrichtung, mindestens umfassend eine Messerwelle mit mehreren auf dem Umfang der Welle angeordneten Schneidmessern und einer Extrusionseinrichtung mit Düsenplatte, die beim Antrieb der Messerwelle von den Messern überstrichen wird, dadurch gekennzeichnet, dass die Zwischenräume zwischen den Messern wenigstens teilweise mit einem Spritzschutz abgedeckt sind, der an der Messerwelle befestigt ist.

Beispielsweise werden beim Besprühen der Messer mit Kühlmittel die Zwischenflächen zwischen den Messern vor Kühlmittel geschützt, in dem man in Verlängerung der Messer einen Spritzschutz einbaut. Dieser Spritzschutz läuft mit dem Messer mit. Er setzt bevorzugt direkt hinter dem Messer an und reicht bis direkt vor das folgende Messer. Die Schneidfläche des folgenden Messers darf nicht überdeckt werden, axial gesehen, damit die dort geschnittenen Formkörper abspringen können. Der Spritzschutz hat einen ausreichenden Abstand zu den Düsenlöchern der Düsenplatte. Die Schnittkörper rutschen auf dem Spritzschutz entlang, wobei sie mit auf dem Spritzschutz befindlichen Kühlmittel in Berührung kommen und ihre Form stabilisieren. Auf dem Spritzschutz gegebenenfalls eingeprägte oder aufgetragene Rillen, Spalte oder Schuppen steuern in einer besonderen Ausführung zusätzlich den Weg des Schnittkörpers und seine Verweilzeit auf dem Spritzschutz.

Bevorzugt besteht die Sprüheinrichtung aus einer oder mehreren Nebeldüsen zur Erzeugung eines Flüssigkeitsnebels, die in Richtung der Düsenplatte ausgerichtet sind. Der Spritzschutz verhindert ein direktes Besprühen der Düsenöffnungen mit der Sprühflüssigkeit.

In einer bevorzugten Ausführung der Erfindung ist die Sprüheinrichtung auf die Rückseite der Schneidmesser gerichtet angeordnet.

In einer bevorzugten Ausführung der Erfindung ist die Sprüheinrichtung auf der Messerwelle der Schneidmesser angeordnet

Besondere Vorteile werden mit einer Ausführung des Messergranulators erzielt, bei der die Flüssigkeitszuführung für die Sprüheinrichtung auf oder in der Messerwelle angeordnet ist und mit umläuft, und durch Leitungen in den Bereich der Messer geführt ist, wobei die Austrittsöffnung der Flüssigkeitszuführung im Bereich der Messer angeordnet ist und in Richtung der Düsenplatte weist.

Eine weitere Verbesserung lässt sich in einer besonders bevorzugten Ausführung der Erfindung erzielen, indem man Kühlmittel (z.B.Wasser) auf den Kopf der Messerwelle spritzt. Dort befindet sich eine "Fangvorrichtung". Von dieser aus führen Kanäle und Rohrleitungen zu den Messern. Nach dem Prinzip der Kreiselpumpe läuft das Kühlmittel entlang der Messerarme nach außen zu den Messern und wird dort an der Schnittfläche verteilt. Günstig ist es, die Austrittsöffnung des Kühlmittels in einigem Abstand vor den Messern enden zu lassen, damit das Kühlmittel axial auf das Messer spritzt.

Die Qualität des Schneidgutes kann weiter verbessert werden, wenn in einer bevorzugten Ausführung die Messer federnd an der Messerwelle befestigt sind und federnd über die Düsenplatte führbar ausgebildet sind. Damit wird ein glatter Schnitt gewährleistet.

Die Düsen der Düsenplatte werden je nach Anwendung in besonderen Formen ausgeführt, z.B. Sternform oder auch Weihnachtsmännerformen (Anwendung für Backwaren).

Gegenstand der Erfindung ist auch ein Verfahren zur Herstellung von Schnittkörpern oder Granulaten aus viskosen Stoffen mittels eines Messergranulators mit Sprüheinrichtung, dadurch gekennzeichnet, dass die Düsenplatte bei einer axialen Besprühung der Messer mit einer Flüssigkeit durch einen an der Messerhalterung angebrachten und mitdrehenden Spritzschutz vor einem direkten Besprühen mit der Flüssigkeit geschützt wird.

Bevorzugt wird ein erfindungsgemäßer oben beschriebener Messergranulator verwendet.

Als viskoser Stoff kann eine Kunststoffschmelze, insbesondere ein thermoplastisches Polymer, ausgewählt aus der Gruppe: Polyamid, Polycarbonat, Polyvinylchlorid, Polyolefin, insbesondere Polypropylen, ABS, SAN-Harz oder Polyurethan oder Mischungen der genannten Polymeren eingesetzt werden.

Als viskoser Stoff wird besonders bevorzugt Polyamid, insbesondere bevorzugt Polyamid verwendet, das insbesondere mit Glasfasern verstärkt ist und einen Anteil an Glasfasern von 15 bis 50 Gew.-%, besonders bevorzugt von 20 bis 30 Gew.-% Glasfasern enthält.

Als Sprühflüssigkeit kann eine Kühlflüssigkeit, insbesondere Wasser verwendet werden.

Alternativ dient als Sprühflüssigkeit eine Heizflüssigkeit, insbesondere Öl, die zum Erhitzen des Granulats führt. Dieses Verfahren wird vorteilhaft bei der Herstellung von Backwaren angewendet.

Die Erfindung wird nachfolgend anhand der Figuren durch die Beispiele, welche jedoch keine Beschränkung der Erfindung darstellen, näher erläutert.

Es zeigen
- Fig. 1: Die Teilansicht eines erfindungsgemäßen Messergranulators bei geöffnetem Gehäuse.
- Fig. 2: Eine alternative Zuführung der Kühlflüssigkeit.

### Beispiel

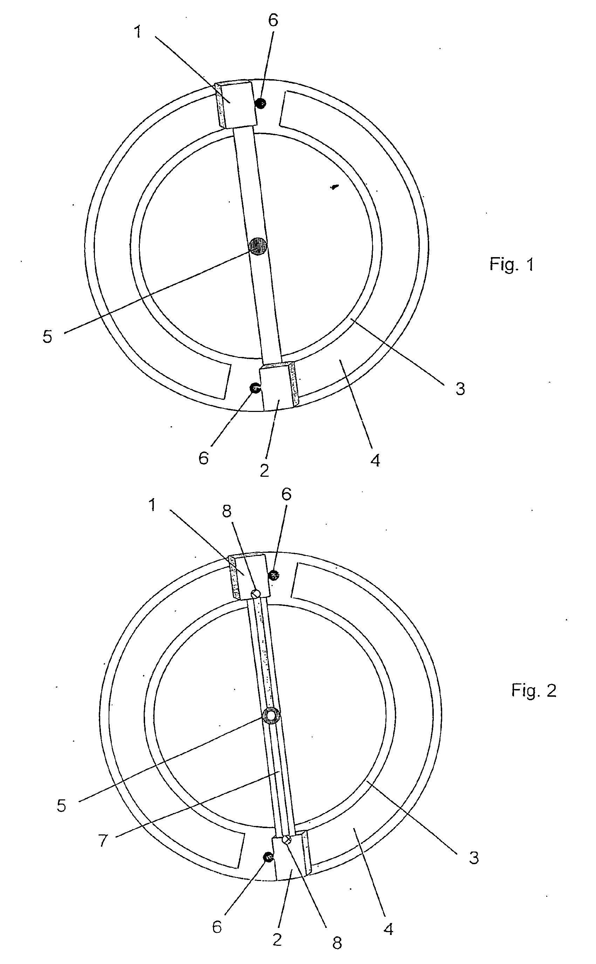

Es laufen zwei Messer 1, 2, die auf dem Umfang einer Messerwelle 5 angeordnet sind, axial um (vergl. Fig. 1; Es ist hier nur die Ansicht auf die Düsenplatte des Granulators gezeigt ohne Gehäuse und Peripherie). Die Drehzahl beträgt 1200U/min. Die Messer 1, 2 sind an der Schneidefläche 10 cm breit. Der Spritzschutz 4 ist nach innen und außen hin je 1 cm breiter als die Messer 1, 2 ausgeführt. Am Ende, also vor dem jeweils folgendem Messer 1 oder 2, ist der Spritzschutz 4 um 2 cm angehoben und hat so zu den Düsenlöchern 6 etwa 2 cm Abstand. Er endet 0,5 cm vor der Schneidefläche des folgenden Messers.

Der Spritzschutz 4 ist ein Kreishalbring aus Edelstahl mit einem Zentralwinkel von 170°, einem Außendurchmesser von 31 cm, einem Innendurchmesser von 19 cm.

Die Düsenplatte 3 mit den Düsen 6 hat einen äußeren Durchmesser von 30 cm und einen inneren Durchmesser von 20 cm. Die Düsenlöcher 6 haben einen Durchmesser von 0,35 cm.

Als Kühlmittel wurde 80 °C heißes Wasser axial auf die Messer 1, 2 und den Spritzschutz 4 gesprüht.

In einer abgewandelten Granulatorvorrichtung (vergl. Fig. 2) wird durch die Welle 5 den zusätzlichen Leitungen 7 das Kühlmittel (Wasser) zugeführt und über die endständigen Öffnungen 8 im Bereich der Messer 1, 2 versprüht.

## Patentansprüche

1. Messergranulator für die Herstellung von Schnittkörpern aus viskosen Stoffen, insbesondere aus Polymeren, mit einer Flüssigkeitssprüheinrichtung, mindestens umfassend eine Messerwelle (5) mit mehreren auf dem Umfang der Welle (5) angeordneten Schneidmessern (1, 2) und einer Extrusionseinrichtung mit Düsenplatte (3), die beim Antrieb der Messerwelle (5) von den Messern (1, 2) überstrichen wird, **dadurch gekennzeichnet, dass** die Zwischenräume zwischen den Messern (1, 2) wenigstens teilweise mit einem Spritzschutz (4) abgedeckt sind, der an der Messerwelle (5) befestigt ist.

2. Messergranulator nach Anspruch 1, **dadurch gekennzeichnet, dass** die Sprüheinrichtung aus einer oder mehreren Nebeldüsen zur Erzeugung eines Flüssigkeitsnebels besteht, die in Richtung der Düsenplatte (3) ausgerichtet sind.

3. Messergranulator nach Anspruch 1 oder 2, **dadurch gekennzeichnet, dass** die Sprüheinrichtung auf die Rückseite der Schneidmesser (1, 2) gerichtet angeordnet ist.

4. Messergranulator nach einem der Ansprüche 1 bis 3, **dadurch gekennzeichnet, dass** die Sprüheinrichtung auf der Messerwelle (5) der Schneidmesser angeordnet ist.

5. Messergranulator nach Anspruch 4, **dadurch gekennzeichnet, dass** die Flüssigkeitszuführung der Sprüheinrichtung auf oder in der Messerwelle (5) angeordnet ist und mit umläuft, und durch Leitungen (7) in den Bereich der Messer (1, 2) geführt ist, wobei die Austrittsöffnung (8) der Flüssigkeitszuführung im Bereich der Messer (1, 2) angeordnet ist und in Richtung der Düsenplatte (3) weist.

6. Messergranulator nach einem der Ansprüche 1 bis 5, **dadurch gekennzeichnet, dass** die Messer (1, 2) federnd an der Messerwelle (5) befestigt sind und federnd über die Düsenplatte (3) führbar sind.

7. Verfahren zur Herstellung von Schnittkörpern oder Granulaten aus viskosen Stoffen mittels eines Messergranulators mit drehenden Schneidmessern und Sprüheinrichtung, **dadurch gekennzeichnet, dass** die Düsenplatte (3) bei einer axialen Besprühung der Messer (1, 2) mit einer Flüssigkeit durch einen an der Messerhalterung angebrachten und mitdrehenden Spritzschutz (4) vor einem direkten Besprühen mit der Flüssigkeit geschützt wird.

8. Verfahren nach Anspruch 7, **dadurch gekennzeichnet, dass** als Messergranulator ein Messergranulator nach einem der Ansprüche 1 bis 6 verwendet wird.

9. Verfahren nach Anspruch 7 oder 8, **dadurch gekennzeichnet, dass** als viskoser Stoff eine Kunststoffschmelze, insbesondere ein thermoplastisches Polymer ausgewählt aus der Gruppe: Polyamid, Polycarbonat, Polyvinylchlorid, Polyolefin, insbesondere Polypropylen, ABS, SAN-Harz oder Polyurethan eingesetzt wird oder Mischungen der genannten Polymeren.

10. Verfahren nach Anspruch 9, **dadurch gekennzeichnet, dass** als viskoser Stoff Polyamid, bevorzugt Polyamid verwendet wird, das insbesondere mit Glasfasern verstärkt ist und einen Anteil an Glasfasern von 15 bis 50 Gew.-%, besonders bevorzugt von 20 bis 30 Gew.-% Glasfasern enthält.

11. Verfahren nach einem der Ansprüche 8 bis 10, **dadurch gekennzeichnet, dass** als Sprühflüssigkeit eine Kühlflüssigkeit, insbesondere Wasser verwendet wird.

12. Verfahren nach einem der Ansprüche 8 bis 10, **dadurch gekennzeichnet, dass** als Sprühflüssigkeit eine Heizflüssigkeit, insbesondere Öl verwendet wird, die zum Erhitzen der Schnittkörper oder des Granulats dient.

## Claims

1. Blade granulator for producing cut bodies from viscous substances, in particular from polymers, with a liquid spray device, at least comprising a blade shaft (5) having a plurality of cutting blades (1, 2), which are arranged on the circumference of the shaft (5), and an extrusion device with a die plate (3) over which the blades (1, 2) pass when the blade shaft (5) is driven, **characterized in that** the interspaces between the blades (1, 2) are at least partially covered by a splash guard (4) which is fastened to the blade shaft (5).

2. Blade granulator according to Claim 1, **characterized in that** the spray device comprises one or more mist projectors, which are oriented in the direction of the die plate (3), for producing a liquid mist.

3. Blade granulator according to Claim 1 or 2, **characterized in that** the spray device is arranged so as to be directed at the rear side of the cutting blades (1, 2).

4. Blade granulator according to one of Claims 1 to 3, **characterized in that** the spray device is arranged on the blade shaft (5) of the cutting blades.

5. Blade granulator according to Claim 4, **characterized in that** the liquid supply for the spray device is arranged on or in the blade shaft (5), rotates together with the latter and is conducted through lines (7) into the region of the blades (1, 2), wherein the outlet opening (8) of the liquid supply is arranged in the region of the blades (1, 2) and points in the direction of the die plate (3).

6. Blade granulator according to one of Claims 1 to 5, **characterized in that** the blades (1, 2) are fastened resiliently on the blade shaft (5) and can be guided resiliently over the die plate (3).

7. Method for producing cut bodies or granules from viscous substances using a blade granulator with rotating cutting blades and a spray device, **characterized in that**, during axial spraying of the blades (1, 2) with a liquid, the die plate (3) is protected from being directly sprayed with the liquid by means of a splash guard (4) which is attached to, and rotates with, the blade holder.

8. Method according to Claim 7, **characterized in that** the blade granulator used is a blade granulator according to one of Claims 1 to 6.

9. Method according to Claim 7 or 8, **characterized in that** the viscous substance used is a polymer melt, in particular a thermoplastic polymer selected from the group consisting of polyamide, polycarbonate, polyvinyl chloride, polyolefin, in particular polypropylene, ABS, SAN resin or polyurethane or mixtures of the aforementioned polymers.

10. Method according to Claim 9, **characterized in that** the viscous substance used is polyamide, preferably polyamide which is reinforced, in particular with glass fibres, and has a glass fibre content of 15 to 50% by weight, particularly preferably of 20 to 30% by weight of glass fibres.

11. Method according to one of Claims 8 to 10, **characterized in that** the spray liquid used is a cooling liquid, in particular water.

12. Method according to one of Claims 8 to 10, **characterized in that** the spray liquid used is a heating liquid, in particular oil, which serves for heating the cut bodies or the granules.

## Revendications

1. Granulateur à couteaux en vue de la fabrication de corps de coupe faits à partir de substances visqueuses, en particulier de polymères, à l'aide d'un équipement de pulvérisation de fluides, comprenant au moins un arbre à couteaux (5) ayant plusieurs couteaux de coupe (1, 2) disposés sur le pourtour de l'arbre (5) et un équipement d'extrusion ayant une plaque à buses (3), qui est brossée, lors de l'entraînement de l'arbre à couteaux (5), par les couteaux (1, 2), **caractérisé en ce que** les espaces intermédiaires entre les couteaux (1, 2) sont recouverts, au moins partiellement, d'une protection de pulvérisation (4), qui est fixée à l'arbre à couteaux (5).

2. Granulateur à couteaux selon la revendication 1, **caractérisé en ce que** l'équipement de pulvérisation se compose d'une ou de plusieurs buses à brouillard en vue de la production d'un brouillard de fluide, qui sont orientées en direction de la plaque à buses (3).

3. Granulateur à couteaux selon la revendication 1 ou 2, **caractérisé en ce que** l'équipement de pulvérisation est arrangé de façon à être tourné vers le verso des couteaux de coupe (1, 2).

4. Granulateur à couteaux selon l'une quelconque des revendications 1 à 3, **caractérisé en ce que** l'équipement de pulvérisation est disposé sur l'arbre à couteaux (5) des couteaux de coupe.

5. Granulateur à couteaux selon la revendication 4, **caractérisé en ce que** l'apport de fluide de l'équipement de pulvérisation est disposé sur ou dans l'arbre à couteaux (5) et tourne avec lui, et est conduite dans le domaine des couteaux (1,2) par des conduits (7), l'ouverture de sortie (8) de l'apport de fluide étant disposée dans le domaine des couteaux (1, 2) et se présentant dans la direction de la plaque à buses (3).

6. Granulateur à couteaux selon l'une quelconque des revendications 1 à 5, **caractérisé en ce que** les couteaux (1, 2) sont fixés d'une manière élastique sur l'arbre à couteaux (5) et peuvent être guidés d'une manière élastique sur la plaque à buses (3).

7. Procédé en vue de la fabrication de corps de coupes ou de granulés faits de substances visqueuses à l'aide d'un granulateur à couteaux ayant des couteaux de coupe rotatifs et un équipement de pulvérisation, **caractérisé en ce que** la plaque à buses (3) est protégée contre une pulvérisation directe à l'aide du fluide, en cas de pulvérisation axiale des couteaux (1, 2) à l'aide d'un fluide, par une protection de pulvérisation (4), disposée dans le support des couteaux et tournant simultanément avec celui-ci.

8. Procédé selon la revendication 7, **caractérisé en ce que** l'on utilise, en tant que granulateur à couteaux, un granulateur à couteaux selon l'une quelconque des revendications 1 à 6.

9. Procédé selon la revendication 7 ou 8, **caractérisé en ce que** l'on utilise, en tant que substance visqueuse, une masse à l'état fondu de matières synthétiques, en particulier un polymère thermoplastique, sélectionné parmi le groupe : polyamide, polycarbonate, chlorure de polyvinyle, polyoléfine, en particulier polypropylène, ABS, résine SAN ou polyuréthanne ou mélanges des polymères cités.

10. Procédé selon la revendication 9, **caractérisé en ce que** l'on utilise, en tant que substance visqueuse, un polyamide, de préférence, un polyamide qui est renforcé, en particulier, à l'aide de fibres de verre et qui contient une proportion en fibres de verre de 15 à 50 % en poids, en particulier, de préférence, de 20 à 30 % en poids de fibres de verre.

11. Procédé selon l'une quelconque des revendications 8 à 10, **caractérisé en ce que** l'on utilise, en tant que fluide de pulvérisation, un fluide, en particulier de l'eau.

12. Procédé selon l'une quelconque des revendications 8 à 10, **caractérisé en ce que** l'on utilise, en tant que fluide de pulvérisation, un fluide caloporteur, en particulier, de l'huile qui sert au chauffage des corps de coupe ou du granulat.
